# EUROPÄISCHE PATENTSCHRIFT

(11) **EP 0 751 692 B1**
(45) Veröffentlichungstag und Bekanntmachung des Hinweises auf die Patenterteilung: **25.08.2004**
(21) Anmeldenummer: 96109893.6
(22) Anmeldetag: 19.06.1996
(51) Int. Cl.: H04Q 11/04, H04Q 3/545

(54) **Verfahren zum Anschluss von Access-Networks mit V5.2-Schnittstellen an Kommunikationssysteme mit nichtredundanten peripheren Einrichtungen**
Method for the convection of access networks with V5.2 interfaces on communication systems with non-redundant peripheral devices
Procédé pour la connexion de réseaux d'accès avec interfaces V5.2 à des systèmes de communication pourvus de dispositifs périphériques non-redondants

(30) Priorität: 30.06.1995 DE 19524029
(43) Veröffentlichungstag der Anmeldung: 02.01.1997
(73) Patentinhaber: SIEMENS AKTIENGESELLSCHAFT, 80333 München (DE)
(72) Erfinder: Löbig, Norbert, Dr.rer.nat., 64291 Darmstadt (DE); Eltschka, Herwig, Dipl.-Ing., 82319 Starnberg (DE)

(56) Entgegenhaltungen:
- EP-A- 0 598 526
- SKARPERDA N: "EWSD HEUTE: GEWACHSENE LEISTUNGSVIELFALT" NACHRICHTENTECHNIK ELEKTRONIK, Bd. 41, Nr. 2, 1. März 1991 (1991-03-01), Seite 56-59 XP000225602 BERLIN, DE ISSN: 0323-4657
- SKAPERDA N: "EWSD MORGEN: ZUKUNFTSSICHERE KOMMUNIKATION" NACHRICHTENTECHNIK ELEKTRONIK, Bd. 41, Nr. 2, 1. März 1991 (1991-03-01), Seite 60-63 XP000225603 BERLIN, DE ISSN: 0323-4657
- POLLHUBER M: "HARDWARE-STRUKTUR UND HARDWARE-FUNKTION DER SYSTEM-VARIANTE OES-E DES OSTERREICHISCHEN DIGITALEN TELEFONSYSTEMS" ELEKTROTECHNIK UND INFORMATIONSTECHNIK, Bd. 106, Nr. 11, 1. Januar 1989 (1989-01-01), Seite 485-495 XP000072615 WIEN, AT ISSN: 0932-383X
- KHAKZAR K: "V5 INTERFACES BETWEEN DIGITAL LOCAL EXCHANGES AND ACCESS NETWORKS" FREQUENZ, Bd. 48, Nr. 1/02, 4. Januar 1994 (1994-01-04), Seite 44-50 XP000439913 BERLIN, DE ISSN: 0016-1136

## Beschreibung

Die Erfindung betrifft ein Verfahren gemäß dem Oberbegriff des Patentanspruchs 1.

Die angesprochenen Kommunikationssysteme weisen nichtredundante periphere Einrichtungen auf. Dies sind beispielsweise Anschlußeinrichtungen für Teilnehmer oder für Leitungen, die Verbindungen zu weiteren Kommunikationssystemen darstellen. Weiterhin weisen Kommunikationssysteme aus wegen Zuverlässigkeitsanforderungen i.a. mindestens gedoppelte zentrale Steuereinrichtungen auf. Dazu gehören zum Beispiel die zentrale Steuereinrichtung, Koppelfelder, Protokollabschlußeinrichtungen (zum Beispiel für Signalisierung Nr. 7), Hintergrundspeicher sowie Bedieneinrichtungen. Alle diese Einrichtungen sind i.a. softwaregesteuerte Ein- bzw. Mehrprozessorsysteme. Beispiele für Kommunikationssysteme sind Ortsvermittlungsstellen mit V5.2-Schnittstellen.

Die peripheren Steuereinrichtungen erfüllen wesentliche, an die Sprachkanäle der peripheren Steuereinrichtung gebundene Vermittlungstechnische Aufgaben. Sie enthalten daher vermittlungstechnische, betriebstechnische und administrative Programme sowie die der Einrichtung zugehörige Dateninformationen wie Anschlußlage, Signalisierung, Berechtigungen, Rufnummern, individuelle Charakteristika von Verbindungsleitungen und Teilnehmeranschlüssen sowie Ausbauzustand, Betriebszustand und Konfiguration der betreffenden peripheren Steuereinrichtung.

Pro PCM30-Strecke einer V5.2-Schnittstelle gibt es bis zu drei sogenannte V5.2 Kommunikationskanäle (Communication Channels, C-Channels), welche die vitalen Schnittstellenprotokolle sowie die PSTN-Signalisierung, die ISDN-Signalisierung und die ISDN -D-Kanal-Paketdaten administrativ zugeordneter V5.2 Teilnehmer heranführen (Unter vitalen Schnittstellenprotokollen versteht der Fachmann Protokolle, bei deren Ausfall die betreffende Schnittstelle entweder funktionsunfähig wird oder total ausfällt). Diese PCM30-Strecken fallen mit dem durch Hardwarefehler hervorgerufenen Ausfall der sie terminierenden, nicht redundanten peripheren Steuereinrichtung bis zu ihrer Reparatur und Wiederinbetriebnahme aus.

Ist an einer peripheren Steuereinrichtung mehr als ein PCM30 Link einer V5.2 Schnittstelle angeschlossen, so stehen im Falle des Ausfalls der peripheren Steuereinrichtung i.a. nicht genügend Ersatzkanäle (gemäß V5.2 Standard höchstens 3 Ersatzkanäle der Protection Group 2 und ein Ersatzkanal der Protection Group 1) zur Ersatzschaltung der ausgefallenen V5.2 C-Channels auf der V5.2 Schnittstelle zur Verfügung. Da die PSTN- und ISDN- Signalisierungsdaten sowie die ISDN D-Kanal-Paketdaten verschiedener C-Channels nicht ohne erheblichen administrativen Aufwand im Teilnehmeranschlußnetz (Access-Network AN) und der betreffenden Ortsvermittlungsstelle (Local Exchange LE) temporär auf die jeweils dann noch verfügbaren C-Channels verteilt werden können, ist der Totalausfall von V5.2 Teilnehmern (Zugang zum Fernsprechnetz und/oder zu Paketnetzen im genannten Fall) unvermeidlich.

Der ETSI-Standard sieht vor, daß die logischen C-Kanäle im Ersatzschaltefall auf der größeren Menge der physikalischen C-Kanäle ersatzgeschaltet werden können. Dies hat zur Folge, daß Signalisierung, Paketdaten und vitalen Protokolle nach Ersatzschaltung neu über die beteiligten peripheren Steuereinrichtungen verteilt sein können.

Die peripheren Steuereinrichtungen sind i.a. über ein gedoppeltes Nachrichtenverteilsystem untereinander und mit der als zentrale Steuereinrichtung ausgebildeten gemeinsamen Rechnerplattform verbunden, welche zentrale und koordinierende Aufgaben wahrnimmt. Wegen der durch den V5.2 Standard ermöglichten freizügigen Verteilung der Sprachkanäle über die V5.2 Schnittstelle hinweg sind die peripheren Steuereinrichtungen, welche die mit Signalisierung beaufschlagten V5.2 C-Channels terminieren, i.a. verschieden von den peripheren Steuereinrichtungen, welche die Vermittlungstechnischen Aufgaben wahrnehmen. Hierdurch entsteht ein außergewöhnlich intensiver interner Nachrichtenverkehr zwischen der peripheren Einrichtung, welche den dem Teilnehmer zugeordneten V5.2 C-Channel mit Signalisierung terminiert, und den von Belegung zu Belegung wechselnden peripheren Steuereinrichtungen, welche die jeweilige Vermittlungstechnische Durchschaltung der Verbindungen dieses Teilnehmers durchführen. Das für diesen internen Nachrichtenverkehr i.a. nicht dimensionierte Nachrichtenverteilsystem wird somit einer signifikanten, eventuell unzulässigen Mehrbelastung ausgesetzt, was zur wesentlichen Minderung der Betriebsgüte (Call Failure Rate) führen kann oder durch Beschaltungsvorschriften (z.B. Beschränkung der Anzahl von Teilnehmern, C-Channels, usw.) vermieden werden muß.

Eine V5.2 Schnittstelle kann in Abhängigkeit von der Anzahl der Teilnehmer 1 bis 16 PCM30 Systeme besitzen. Bei Wachstum der Anzahl der Teilnehmer im Einzugsbereich des zugehörigen Access Network muß eine Erweiterung der V5.2 Schnittstelle in Erweiterungsschritten von einzelnen PCM30 Systemen bis hin zum Vollausbau der V5.2 Schnittstelle möglich sein, ohne daß pro V5.2 Schnittstelle entsprechende PCM30 Terminations in der Ortsvermittlungsstelle vorgehalten werden oder die bestehenden Streckenverkabelungen in der Ortsvermittlungsstelle verändert werden müssen. Eine periphere Steuereinrichtung eines Kommunikationssystems terminiert u.U. eine wesentlich kleinere Zahl von PCM30-Strecken pro peripherer Steuereinrichtungen.

In der deutschen Patentanmeldung P 44 22 805.8 ist ein Verfahren vorgeschlagen, mit dem die Verfügbarkeit eines Kommunikationssystems für die an periphere, ungedoppelte Steuereinrichtungen angeschlossenen Teilnehmer sichergestellt werden kann, wenn Software bei Inbetriebnahme in dieselben geladen wird. Darin wird offenbart, wie insbesondere die V5.2 Kommunikationskanäle während des Ladevorgangs auf die verbleibende Systemhälfte umgeleitet werden. Damit können während dieser Zeit alle V5.2 Kommunikationskanäle bedient werden, womit für die betreffenden Teilnehmer die Systemverfügbarkeit sichergestellt ist. Eine Vorgehensweise, wie bei Ausfall einer oder mehrerer peripheren Steuereinrichtungen die Systemverfügbarkeit für die daran angeschlossenen V5.2 Teilnehmer sichergestellt werden kann, ist hier jedoch nicht angesprochen.

Aus der Veröffentlichung "Pollhuber M: 'Hardware-Struktur und Hardware-Funktion der System-Variante OES-E des österreichischen digitalen Telefonsystems' Elektotechnik und Informationstechnik, Bd.106, Nr.11, 1.Januar 1989 (1998-01-01), Seite 485-495 XP000072615 Wien, AT ISSN: 0932-383X" ist ein Vermittlungssystem bekannt, an das Teilnehmer über eine Mehrzahl von Schnittstellen angeschlossen ist. V5.2 Schnittstellen sind hierin allerdings nicht angesprochen.

Der Erfindung liegt die Aufgabe zugrunde, ein Teilnehmeranschlußnetz (Access Network) mit V5.2 Schnittstellen an eine Ortsvermittlungsstelle mit nichtredundanten peripheren Einrichtungen derart anzuschließen und zu betreiben, daß es für die Dauer des Ausfalls einer peripheren Steuereinrichtung nicht zu Totalausfällen von V5.2 Teilnehmern bezüglich des Zugangs zum Fernsprechnetz und zu Paketnetzen kommt und zugleich keinerlei Einschränkungen in Bezug auf den V5.2 Standard hingenommen werden müssen.

Die Erfindung wird, ausgehend vom Oberbegriff des Patentanspruchs 1 durch die im kennzeichnenden Teil angegebenen Merkmale gelöst.

Vorteilhaft an der Erfindung ist, daß die Sprachkanäle unabhängig von der physikalischen Lage des wenigstens einen Signalisierungskanals über alle an einer V5.2-Schnittstelle beteiligten peripheren Steuereinrichtungen genutzt werden.Dies hat den Vorteil, daß alle peripheren Steuereinrichtungen gleichmäßig ausgelastet werden und die Gesamtheit der Sprachkanäle der V5.2-Schnittstelle für einen Verbindungswunsch eines Teilnehmers der V5.2-Schnittstelle zur Verfügung steht. Hierbei sind mehrere Teilnehmer in einer Teilnehmergruppe zusammengefasst. Vorteilhaft an der Erfindung ist ferner, daß V5.2-Schnittstellen mit bis zu 16 PCM-Strecken über eine Mehrzahl peripherer Steuereinrichtungen mit jeweils wesentlich geringerer Anschlußkapazität (z.B. 4 PCM30 Terminations pro peripherer Steuereinrichtung) betrieben werden können. Ein weiterer Vorteil ist darin zu sehen, daß ein z.B. fehlerbedingtes Ersatzschalten eines C-Kanals nur eine Verlagerung der zugehörigen Signalisierungsfunktion in eine andere periphere Steuereinrichtung bedeutet ohne Rückwirkung auf die die zugeordnete Verbindungen bearbeitende Vermittlungstechnische Funktionen.

Vorteilhafte Ausgestaltungen der Erfindung sind in den Unteransprüchen angegeben.

Gemäß Anspruch 2 ist vorgesehen, daß die an einer Schnittstelle gesondert für jede Belegung vorgenommene Zuordnung eines Teilnehmers zu der weiteren peripheren Steuereinrichtung von der peripheren Steuereinrichtung gesteuert wird, welche den PCM-Link mit den vitalen Schnittstellenprotokollen der Schnittstelle terminiert, womit in dieser peripheren Steuereinrichtung eine Master-Funktion für die Schnittstelle definiert wird. Damit ist der Vorteil verbunden, daß die die Master-Funktion tragende periphere Steuereinrichtung eine zentrale Instanz für die Vergabe der Sprachkanäle darstellt und gleichzeitig die Durchschaltung des Sprachkanals im Teilnehmerzugangsnetz über den vitalen Steuerkanal veranlaßt.

Gemäß Anspruch 3 ist vorgesehen, daß die an einer Schnittstelle gesondert für jede Belegung vorgenommene Zuordnung eines Teilnehmers zu der weiteren peripheren Steuereinrichtung von der zentralen Steuereinrichtung insbesondere im Falle B-seitiger Belegung gegebenenfalls in Verbindung mit der die Master-Funktion zur Verfügung stellenden peripheren Steuereinrichtung vorgenommen wird. In diesem Fall bestimmt die zentrale Steuereinrichtung, insbesondere für angerufene V5.2-Teilnehmer (B-seitige Belegung) über welche der peripheren Steuereinrichtungen an der V5.2 Schnittstelle der Sprachkanal geschaltet wird. Damit ist der Vorteil geringen Nachrichtenaufkommens zwischen zentraler Steuereinrichtung und peripherer Steuereinrichtung verbunden.

Gemäß Anspruch 4 ist vorgesehen, daß die die Master-Funktion zur Verfügung stellende periphere Steuereinrichtung eine Tabelle aufweist, die ein momentanes Abbild des Belegungszustandes bzw. Auslastungsgrades der einzelnen peripheren Steuereinrichtungen beinhaltet, und
daß die an einer Schnittstelle gesondert für jede Belegung vorgenommene Zuordnung eines Teilnehmers zu der weiteren peripheren Steuereinrichtung unter Berücksichtigung des Auslastungsgrades der peripheren Steuereinrichtungen durchgeführt wird. Damit ist der Vorteil verbunden, daß eine gleichmäßige Auslastung der zur Verfügung stehenden Betriebsmittel des Kommunikationssystems (Sprachkanäle, Rechner-Performanz, Speicherauslastung, Nachrichtentransportkapazität) erreicht wird.

Gemäß Anspruch 5 ist vorgesehen, daß im Falle eines zulässigen Auslastungsgrades die vermittlungstechnische Funktion und damit der Sprachkanal für eine Belegung vorzugsweise durch die periphere Steuereinrichtung bereitgestellt wird,die die Signalisierungsinformationen des betroffenen Teilnehmers heranführt.Damit ist der Vorteil verbunden,daß eine geringere Belastung des internen Nachrichtenverteilsystems erreicht wird.

Gemäß Anspruch 6 ist vorgesehen,daß in der peripheren Steuereinrichtung, die die für die Kanäle mit den vitalen Schnittstellenprotokollen vorgesehenen redundanten Kanäle der Schnittstelle terminiert, zur Zeit jedoch nicht die vitalen Schnittstellenprotokolle führt, ein hinreichend genaues Abbild der Tabelle der Master-Funktion, also insbesondere ein Abbild des Belegungszustandes der gesammten Schnittstelle gepflegt wird, damit bei Ausfall der die Master-Funktion bereitstellenden peripheren Steuereinrichtungen eine Ersatzschaltung der Master-Funktion auf die vorstehend genannte periphere Steuereinrichtung möglich ist und bestehende Verbindungen, welche nicht über die ausgefallene periphere Steuereinrichtung geführt sind, erhalten bleiben, wodurch sich eine Stand-by Funktion für die Schnittstelle definiert. Damit ist der Vorteil verbunden, daß bei Ausfall der peripheren Steuereinrichtung mit der Master-Funktion die genannte periphere Steuereinrichtung die Master-Funktion übernehmen kann und ein Totalausfall der Schnittstelle vermieden werden kann. Durch diese Funktionalität definiert sich eine pro V5.2-Schnittstelle existierende Standby-Funktion.

Gemäß Anspruch 7 ist vorgesehen, daß die peripheren Steuereinrichtungen redundant ausgebildet, insbesondere gedoppelt sind, wobei im Falle der Terminierung der Kanäle mit den vitalen Schnittstellenprotokollen einer Schnittstelle und der für sie vorgesehenen redundanten Kanäle in der gleichen peripheren Steuereinrichtung die Stand-by Funktion für diese Schnittstelle entfallen kann. Damit ist das erfindungsgemäße Verfahren auch im Falle redundanter, insbesondere gedoppelter peripherer Steuereinrichtungen anwendbar. Insbesondere im Falle der Terminierung von Primary und Secondary Link in der gleichen peripheren redundanten Steuereinrichtung kann dann die Standby-Funktion entfallen. Damit sind die bereits genannten Vorteile verbunden. Ferner ist der Vorteil geringen Nachrichtenaufkommens zwischen den an einer V5.2-Schnittstelle beteiligten redundanten peripheren Steuereinrichtungen damit verbunden.

Im folgenden wird die Erfindung anhand eines Ausführungsbeispiels näher erläutert.

Es zeigen:
- Figur 1: die typische Systemarchitektur eines Kommunikationssystems
- Figur 2: die auf bis zu vier verschiedenen peripheren Steuereinrichtungen verteilten Funktionen, die das erfindungsgemäße Verfahren kennzeichnen.

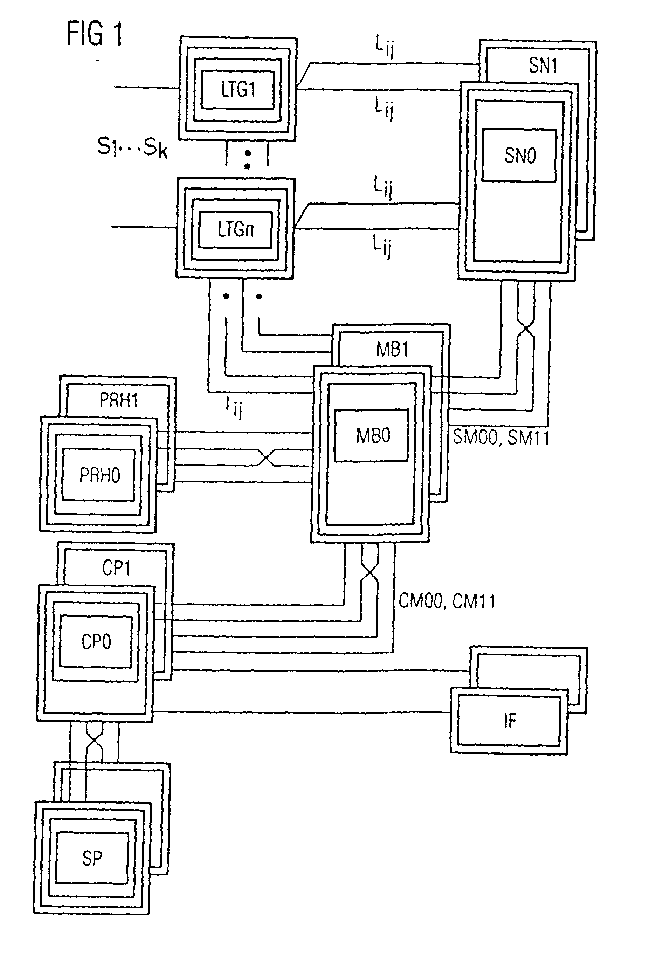

Fig. 1 zeigt die typische Systemarchitektur eines Kommunikationssystems mit ungedoppelten peripheren Steuereinrichtungen LTG₁ ... LTGₙ. Sie sind ausgangsseitig mit Teilnehmern bzw. weiteren Kommunikationssystemen verbunden; die von den beiden letzten ausgehenden Informationen werden von den peripheren Steuereinrichtungen LTG₁ ... LTGₙ empfangen und über Verbindungen Lij dem redundant ausgebildeten Koppelfeld SN0, SN1 zugeführt. Weiterhin sind die peripheren Steuereinrichtungen LTG₁ ... LTGₙ über weitere Verbindungen Iij mit den redundant ausgebildeten Nachrichtenverteilereinheiten MB0, MB1 verbunden, die ihrerseits über weitere Verbindungen Iij zum einen mit den redundant ausgebildeten Einrichtungen zur Behandlung zentraler Protokollabschlußaufgaben PRH (z.B. zentraler Zeichenkanal für No. 7, Signalisierung, Zugang zu Paketnetzen) und zum anderen mit dem Koppelfeld SN0, SN1 sowie mit der ebenfalls redundant ausgebildeten zentralen Steuereinrichtung CP0, CP1, die die Funktion einer zentralen Rechnerplattform hat, verbunden sind. Letztere ist an einen gedoppelten Massenspeicher SP angeschlossen. Im weiteren sind an die zentrale Steuereinrichtung CP0,CP1 Interface-Einheiten IF zur Anschaltung von Bedienungselementen bzw. zur Alarmierung vorgesehen. Das Koppelfeld SN0, SN1, die Nachrichtenverteilereinheiten MB0, MB1, die Einrichtungen zur Behandlung zentraler Protokollabschlußaufgaben PRH0, PRH1, die zentrale Steuereinrichtung CP0, CP1 sowie die Massenspeicher SP und die Interface-Einheiten IF sind somit im Kommunikationssystem jeweils gedoppelt vorgesehen. Die peripheren Steuereinrichtungen LTG₁ ... LTGₙ hingegen sind bei vorliegendem Ausführungsbeispiel ungedoppelt.

Die V5.2 spezifischen Funktionen der peripheren Steuereinrichtungen LTG₁ ... LTGₙ sind:
1.) Die an die Sprachkanäle der peripheren Steuereinrichtung gebundene Vermittlungstechnische Bearbeitung (Vermittlungstechnische-Funktion VTF), welche in jeder ein PCM30 System einer V5.2 Schnittstelle terminierenden peripheren Steuereinrichtung aktiv ist.
2.) Die Terminierung der in der jeweiligen PCM30 Strecke und ihren V5.2 Kommunikationskanälen herangeführten Signalisierungsprotokolle in der diese PCM30 Strecke terminierenden peripheren Steuereinrichtungen (Signalisierungsfunktion, Abschluß der PSTN, ISDN Signalisierung in jeder peripheren Einrichtung mit entsprechendem Signalisierungspfad).
3.) Die Steuerung der V5.2 Schnittstelle entweder in der den sogenannten Primary Link terminierenden peripheren Steuereinrichtung oder in der sog. Secondary Link terminierender peripheren Steuereinrichtung (Master-Funktion für Sprachkanalvergabe und zentrale Steuerungsaufgaben, pro V5.2 Schnittstelle genau einmal vorhanden).
4.) Die Vorhaltung hinreichend redundanter Steuerungsdaten, insbesondere Daten der Sprachkanalbelegung und der Portzustände in der peripheren Steuereinrichtung, welche den Primary oder den Secondary Link terminiert, nicht jedoch die Master-Funktion bereitstellt (Standby-Funktion für Master-Funktion, pro V5.2 Schnittstelle genau einmal vorhanden). Zur weiteren Reduktion dieses V5.2 spezifischen internen Nachrichtenverkehrs wird die Vermittlungstechnische Funktion VTF, die durch eine vermittlungstechnische Prozedur realisiert wird, pro Verbindungswunsch vorzugsweise in der peripheren Steuereinrichtung mit der dem betroffenen Teilnehmer zugeordneten Signalisierungsfunktion SF aktiviert. Letztere ist als Signalisierungsprozedur realisiert. Die Signalisierungsfunktion SF ist für einen V5.2 Teilnehmer einer festen peripheren Steuereinrichtung zugeordnet. Diese Zuordnung ist nur per Administration/Bediener oder fehlerbedingter Kommunikationskanal-Ersatzschaltung veränderbar.

Der den Link mit den vitalen Schnittstellenprotokollen (Primary oder Secondary Link) führenden peripheren Steuereinrichtung ist zusätzlich zur Vermittlungstechnischen Funktion und ggf. Signalisierungsfunktion die Masterfunktion für die V5.2 Schnittstelle zugewiesen. Dies bedeutet unter anderem die Bearbeitung der zentralen Protokolle der V5.2 Schnittstelle, die Buchführung über die Sprachkanalzuordnung, die Aktivierung der Vermittlungstechnischen Funktionen der beteiligten peripheren Steuereinrichtungen pro Call in Abhängigkeit von der Verfügbarkeit benötigter Ressourcen sowie die Fehlerbehandlung der zugeordneten Ports. Der den Link, welcher den Ersatzkanal für die vitalen Schnittstellenprotokolle (Primary oder Secondary Link) führenden peripheren Steuereinrichtung ist zusätzlich zur Vermittlungstechnischen Funktion und ggf. Signalisierungsfunktion die Standby-Funktion für die V5.2 Schnittstelle zugewiesen. Dies bedeutet unter anderem die Bearbeitung des Protection Protokolls, die redundante Führung der Sprachkanalzuordnung und der Portzustandsinformation für den Fall des Ausfalls der Master-Funktion.

Insbesondere ist davon auszugehen, daß für eine PSTN oder ISDN Verbindung die folgenden maximal vier verschiedenen peripheren Steuereinrichtungen tätig werden:
1.) Die periphere Steuereinrichtung mit Signalisierungsfunktion, welche den jeweiligen ISDN oder PSTN Signalisierungskanal terminiert,
2.) die periphere Steuereinrichtung mit der Vermittlungstechnischen Funktion, welche die Vermittlungstechnischen Abläufe steuert (und insbesondere den Sprachkanal heranführt),
3.) die periphere Steuereinrichtung mit der Master-Funktion, welche dem Zugangsnetz mit V5.2 Schnittstelle über das BCC Protokoll die Sprachkanalzuordnung auf der V5.2 Schnittstelle mitteilt, sowie
4.) die periphere Steuereinrichtung mit Standby-Funktion, welche insbesondere hinsichtlich aller BCC Aktivitäten zur Schaffung redundanter Informationen aktualisiert werden muß.

Erfindungsgemäß wird bei jeder A-seitigen Belegung von der peripheren Steuereinrichtung mit der Masterfunktion bestimmt, welche der peripheren Steuereinrichtungen an der V5.2 Schnittstelle für die betreffende Verbindung die Vermittlungstechnische Funktion ausüben soll. Dies bedeutet, daß in der peripheren Steuereinrichtung mit der Masterfunktion festgelegt wird, über welche der peripheren Steuereinrichtungen die Sprachkanäle geführt werden. Alternativ können diese Funktionen auch von der zentralen Steuereinrichtung vorgenommen werden. Als Kriterium für die Festlegung wird der Auslastungsgrad der peripheren Steuereinrichtungen sowie die Bevorzugung der peripheren Steuereinrichtungen mit Signalisierungsfunktion berücksichtigt.

Dabei gilt es zu berücksichtigen, daß die die Master-Funktion zur Verfügung stellende periphere Steuereinrichtung diese lediglich für die betreffende V5.2 Schnittstelle ausübt. Beim Anschluß einer Mehrzahl von V5.2 Schnittstellen kann damit eine sich von dieser Mehrzahl gegebenenfalls unterscheidende Mehrzahl von peripheren Steuereinrichtungen auch mehrere periphere Steuereinrichtungen mit Masterfunktion aufweisen. Vorteilhaft hieran ist eine größere Beschaltungsfreiheit für den Betreiber der Ortsvermittlungsstelle.

Bei B-seitiger Belegung wird von der zentralen Steuereinrichtung gegebenenfalls unter Einbeziehung der Master-Funktion die periphere Steuereinrichtung bestimmt, welche die Vermittlungstechnische Funktion für diesen Belegungswunsch wahrnehmen soll. Dies geschieht beispielsweise anhand von pro peripherer Steuereinrichtung und V5.2 Schnittstelle zu führenden Belegungszählern und ebenfalls unter Bevorzugung der peripheren Steuereinrichtung mit der Signalisierungsfunktion. Vorteilhaft hieran ist eine weitere gleichmäßigere Auslastung der Schnittstelle sowie eine geringe Belastung des internen Nachrichtenverteilsystems.

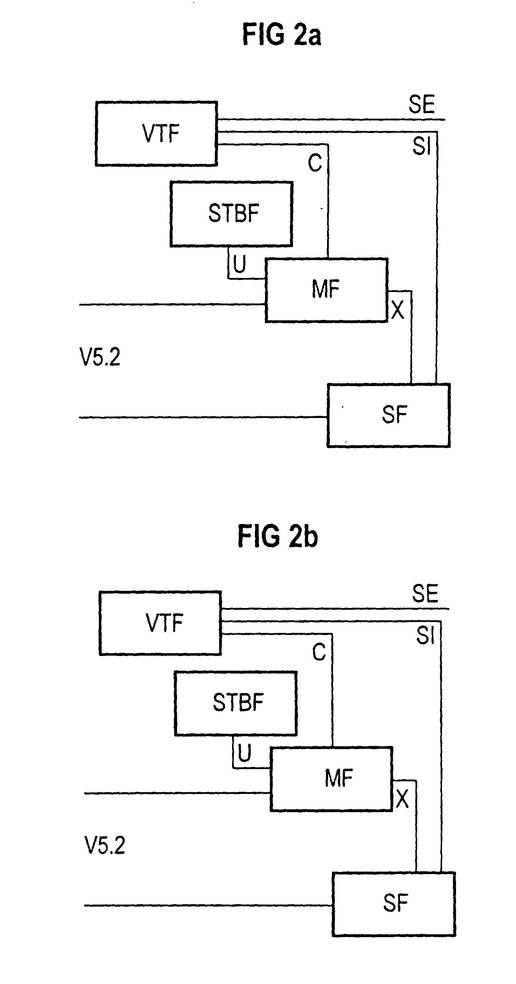

Im weiteren sollen die Kommunikationsbeziehungen zwischen den voranstehend definierten Funktionskomplexen für einen konkreten Verbindungsaufbau anhand von Figur 2 aufgezeigt werden:

Figur 2a bezieht sich auf die A-seitige Belegung der V5.2 Schnittstelle. Dies bedeutet, daß von einem Teilnehmer der V5.2-Schnittstelle ein Belegungswunsch ausgeht. Die Master-Funktion MF wird von der Signalisierungsfunktion SF über eine Nachrichtenschnittstelle X über diesen Vorgang informiert. Weiterhin wird von der Master-Funktion MF festgelegt, über welche der peripheren Steuereinrichtungen LTG₁..LTGₙ der dem Teilnehmer zugeordnete Sprachkanal geführt werden soll (im Falle eines ISDN Teilnehmers können dies auch mehrere Sprachkanäle sein), und damit welche der peripheren Einrichtungen LTG₁...LTGₙ die Vermittlungstechnische Funktion für diese Belegung ausüben soll. Weiterhin wird die Vermittlungstechnische Funktion VTF von der Master-Funktion MF über eine Nachrichtenschnittstelle C über das Ergebnis der Festlegung informiert. Die Signalisierungsfunktion wird über das Ergebnis der voranstehend genannten Festlegung direkt über die Nachrichtenschnittstelle X oder indirekt über die Nachrichtenschnittstelle SI zwischen Vermittlungstechnischer Funktion VTF und Signalisierungsfunktion SF informiert. Da die Stand-by-Funktion im Fehlerfall die Master-Funktion übernehmen muß, wird diese Festlegung über eine Nachrichtenschnittstelle U derselben zugeführt, während die eintreffende Signalisierung von der Signalisierungsfunktion SF über die Nachrichtenschnittstelle SI zur Vermittlungstechnischen Funktion VTF geroutet wird. In gleicher Weise wird von der Vermittlungstechnischen Funktion VTF die auszusendende Signalisierung über die Nachrichtenschnittstelle SI zur Signalisierungsfunktion SF gesendet.Der weitere Verbindungsaufbau wird über die Nachrichtenschnittstelle SE zwischen Vermittlungstechnischer Funktion VTF und den weiteren Einrichtungen des Kommunikationssystems (periphere Steuereinrichtungen und zentrale Steuereinrichtung) abgewickelt.

Die Verhältnisse für die B-seitige Belegung sind in Figur 2b aufgezeigt:

Die zentrale Steuereinrichtung legt den Sprachkanal sowie die periphere Steuereinrichtung fest, über die der Sprachkanal geführt werden soll. Die Festlegung wird über die Nachrichtenschnittstelle SE der Vermittlungstechnischen Funktion VTF mitgeteilt. Letztere informiert nun die Master-Funktion MF über die Nachrichtenschnittstelle C und veranlaßt damit die Durchschaltung der Verbindung zum gerufenen Teilnehmer im Access Network AN und die Information der Standby-Funktion STBF über die Nachrichtenschnittstelle. Die Vermittlungstechnische Funktion VTF informiert die Signalisierungsfunktion SF und routet die auszusendende Signalisierung zur Signalisierungsfunktion SF über die Nachrichtenschnittstelle SI. Die Signalisierungsfunktion SF routet die von der V5.2-Schnittstelle eintreffende Signalisierung ebenfalls über die Nachrichtenschnittstelle SI zur Vermittlungstechnischen Funktion VTF.

Abschließend sei noch erwähnt, daß das vorstehend beschriebene erfindungsgemäße Verfahren bei Kommunikationssystemen mit nichtredundanten, peripheren Steuereinrichtungen zur Anwendung gelangt. Eine Übertragung auf Kommunikationssysteme mit redundanten peripheren Steuereinrichtungen ist jedoch auch ohne weiteres möglich. In diesem Fall wird dann ebenfalls eine freizügige, systemweite Beschaltbarkeit aller peripheren Steuereinrichtungen mit PCM30 Systemen beliebig vieler V5.2 Schnittstellen ermöglicht. Bei Beachtung gewisser Beschaltungsvorgaben kann die Standby-Funktion STB in den peripheren Steuereinrichtungen entfallen.

## Patentansprüche

1. Verfahren zum Anschluss einer Mehrzahl von Teilnehmeranschlussnetzen (AN₁...ANₘ) mit einer Mehrzahl von Schnittstellen (S₁...Sₖ), insbesondere mit V5.2 Schnittstellen, an ein Kommunikationssystem, das ein Koppelfeld (SN), eine zentrale Steuereinrichtung (CP) sowie eine weitere Mehrzahl von peripheren Steuereinrichtungen (LTG₁...LTGₙ) aufweist, wobei jeweils wenigstens einer der Teilnehmer in wenigstens einer Teilnehmergruppe zusammengefasst ist, über eine der Schnittstellen (Sᵢ,1≤i≤k) Zugang zu dem Kommunikationssystem hat und wobei eine bestehende bzw. aufzubauende Verbindung die Belegungen wenigstens zweier Teilnehmer definiert,
**dadurch gekennzeichnet,**
**dass** eine Zuordnung einer Teilnehmergruppe zu einer Signalisierungsfunktion (SF) vorgenommen wird,
**dass** von der die vitalen Schnittstellenprotokolle terminierenden peripheren Steuereinrichtung (LTG₁...LTGₙ) eine Masterfunktion (MF) bereitgestellt wird,
**dass** im Falle eines von einem der Teilnehmer der Teilnehmergruppe ausgehenden Verbindungswunsches dieser von der zugeordneten Signalisierungsfunktion (SF) in Abstimmung mit der Masterfunktion (MF) zu einer weiteren peripheren Steuereinrichtung (LTG₁...LTGₙ) geleitet wird, und
**dass** von einer dort residenten vermittlungstechnischen Prozedur (VTF) ein Sprachkanal bereitgestellt und in Verbindung mit der Masterfunktion durchgeschaltet wird, und die von dem Kommunikationssystem in Richtung des Teilnehmers auszubringende Signalisierung an die dem Teilnehmer zugeordnete Signalisierungsprozedur (SF) zur Übertragung zum Teilnehmer weitergeleitet wird.

2. Verfahren nach Anspruch 1
**dadurch gekennzeichnet,**
**dass** die Master-Funktion (MF) für die Schnittstelle (Sᵢ) definiert wird, indem die an einer Schnittstelle (Sᵢ, mit 1≤i≤k) gesondert für jede Belegung vorgenommene Zuordnung eines Teilnehmers zu der weiteren peripheren Steuereinrichtung (LTGⱼ, 1≤j≤n) von der peripheren Steuereinrichtung gesteuert wird, welche den PCM-Link mit den vitalen Schnittstellenprotokollen der Schnittstelle (Sᵢ) terminiert.

3. Verfahren nach Anspruch 1
**dadurch gekennzeichnet,**
**dass** die an einer Schnittstelle (Sᵢ, mit 1≤i≤k) gesondert für jede Belegung vorgenommene Zuordnung eines Teilnehmers zu der weiteren peripheren Steuereinrichtung (LTGⱼ, 1≤j≤n) von der zentralen Steuereinrichtung (CP) insbesondere im Falle B-seitiger Belegung gegebenenfalls in Verbindung mit der die Master-Funktion (MF) zur Verfügung stellenden peripheren Steuereinrichtung vorgenommen wird.

4. Verfahren nach Anspruch 1, 2 oder 3
**dadurch gekennzeichnet,**
**dass** die die Master-Funktion zur Verfügung stellende periphere Steuereinrichtung eine Tabelle aufweist, die ein momentanes Abbild des Belegungszustandes bzw. Auslastungsgrades der einzelnen peripheren Steuereinrichtungen beinhaltet, und dass die an einer Schnittstelle (Sᵢ, mit 1≤i≤k) gesondert für jede Belegung vorgenommene Zuordnung eines Teilnehmers zu der weiteren peripheren Steuereinrichtung (LTGⱼ, 1≤j≤n) unter Berücksichtigung des Auslastungsgrades der peripheren Steuereinrichtungen (LTG₁...LTGₙ) durchgeführt wird.

5. Verfahren nach einem der vorstehenden Ansprüche
**dadurch gekennzeichnet,**
**dass** im Falle eines zulässigen Auslastungsgrades die vermittlungstechnische Prozedur (VTF) und damit der Sprachkanal für eine Belegung vorzugsweise durch die periphere Steuereinrichtung bereitgestellt wird,die die Signalisierungsinformationen des betroffenen Teilnehmers heranführt.

6. Verfahren nach einem der vorstehenden Ansprüche
**dadurch gekennzeichnet,**
**dass** in der peripheren Steuereinrichtung, die die für die Kanäle mit den vitalen Schnittstellenprotokollen vorgesehenen redundanten Kanäle der Schnittstelle (S_{ᵢ})terminiert, zur Zeit jedoch nicht die vitalen Schnittstellenprotokolle führt, ein hinreichend genaues Abbild der Tabelle der Master-Funktion, also insbesondere ein Abbild des Belegungszustandes der gesammten Schnittstelle (Sᵢ) gepflegt wird, damit bei Ausfall der die Master-Funktion bereitstellenden peripheren Steuereinrichtungen eine Ersatzschaltung der Master-Funktion auf die vorstehend genannte periphere Steuereinrichtung möglich ist und bestehende Verbindungen, welche nicht über die ausgefallene periphere Steuereinrichtung geführt sind, erhalten bleiben, wodurch sich eine Stand-by Funktion für die Schnittstelle (Sᵢ) definiert.

7. Verfahren nach einem der vorstehenden Ansprüche
**dadurch gekennzeichnet,**
**dass** die peripheren Steuereinrichtungen redundant ausgebildet, insbesondere gedoppelt sind, wobei im Falle der Terminierung der Kanäle mit den vitalen Schnittstellenprotokollen einer Schnittstelle (Sᵢ) und der für sie vorgesehenen redundanten Kanäle in der gleichen peripheren Steuereinrichtung die Stand-by Funktion für diese Schnittstelle (Sᵢ) entfallen kann.

## Claims

1. Method for connecting a plurality of access networks (AN₁...ANₘ) with a plurality of interfaces (S₁...Sₖ), more specifically with V5.2 interfaces, to a communication system which has a switching network (SN), a central control device (CP) and a further plurality of peripheral control devices (LTG₁...LTGₙ), at least one of the subscribers in each case being combined into a least one subscriber group and having access to the communication system via one of the interfaces (Sᵢ,1≤i≤k), and an existing connection or a connection to be set up defining the seizures of at least two subscribers,
**characterized in that** an assignment of a subscriber group to a signaling function (SF) is performed,
that a master function (MF)is provided by the peripheral control device (LTG₁...LTGₙ) terminating the vital interface protocols,
that in the event of a call request originating from one of the subscribers of the subscriber group, said request is routed by the assigned signaling function (SF) in coordination with the master function (MF) to another peripheral control device (LTG₁...LTGₙ), and
that a voice channel is provided by a call-processing procedure (VTF) resident there and through-connected in conjunction with the master function, and the signaling to be fed out by the communication system in the subscriber's direction is forwarded to the signaling procedure (SF) assigned to the subscriber for transmission to said subscriber.

2. Method according to Claim 1
**characterized in that** the master function (MF) for the interface (Sᵢ) is defined **in that** the assignment, performed separately for each seizure at an interface (Sᵢ, with 1≤i≤k), of a subscriber to the other peripheral control device (LTGⱼ, 1≤j≤k) is controlled by the peripheral control device terminating the PCM link carrying the vital interface protocols of the interface (Si).

3. Method according to Claim 1
**characterized in that** the assignment, performed separately for each seizure at an interface (Sᵢ, with 1≤i≤k), of a subscriber to the other peripheral control device (LTGⱼ, 1≤j≤k) is performed by the central control device (CP) possibly, more specifically in the event of B-side seizure, in conjunction with the peripheral control device providing the master function (MF).

4. Method according to Claim 1, 2 or 3
**characterized in that** the peripheral control device providing the master function has a table containing a snapshot of the busy/idle status or usage factor of the individual peripheral control devices, and
that the assignment, performed separately for each seizure at an interface (Sᵢ, with 1≤i≤k), of a subscriber to the other peripheral control device (LTGⱼ, 1≤j≤k) is carried out taking into account the usage factor of the peripheral control devices (LTG₁...LTGₙ).

5. Method according to one of the preceding Claims
**characterized in that** in the event of a permissible usage factor the call-processing procedure (VTF) and therefore the voice channel for a seizure is preferably provided by the peripheral control device carrying the signaling information of the subscriber concerned.

6. Method according to one of the preceding Claims
**characterized in that** a sufficiently exact picture of the master function table, i.e. more specifically a representation of the busy/idle status of the entire interface (Sᵢ), is maintained in the peripheral control device which terminates said interface's redundant channels provided for the channels carrying the vital interface protocols but which is not currently carrying the vital interface protocols, so that in the event of failure of the peripheral control devices providing the master function, protection switching of the master function to the abovementioned peripheral control device is possible and existing calls not routed via the failed peripheral control device are retained, thereby defining a standby function for the interface (Si).

7. Method according to one of the preceding Claims
**characterized in that** the peripheral control devices are implemented on a redundant basis, more specifically are duplicated, it being possible in the case of termination of the channels with the vital interface protocols of an interface (Sᵢ), and of the redundant channels provided for them, in the same peripheral control device to dispense with the standby function for this interface (Sᵢ).

## Revendications

1. Procédé de connexion d'une pluralité de réseaux de connexion d'abonnés (AN₁ ... ANₘ) avec une pluralité d'interfaces (S₁...Sₖ), notamment avec des interfaces V5.2, à un système de communication muni d'un réseau de connexion (SN), d'un dispositif de commande central (CP) et d'une pluralité supplémentaire de dispositifs périphériques de commande (LTG₁...LTGₙ), respectivement au moins l'un des abonnés étant regroupé dans au moins un groupe d'abonnés, ayant accès au système de communication par l'intermédiaire de l'une des interfaces (Sᵢ, 1≤i≤k) et une communication existante ou devant être établie définissant la prise de ligne par au moins deux abonnés,
**caractérisé en ce**
**qu'**un groupe d'abonnés est affecté à une fonction de signalisation (SF),
en ce que les dispositifs périphériques de commande (LTG₁...LTGₙ) terminant les protocoles d'interface vitaux mettent à disposition une fonction de maître (MF),
**que** dans le cas d'une demande de prise de ligne par l'un des abonnés du groupe d'abonnés, ce dernier est acheminé par la fonction de signalisation affectée (SF) en accord avec la fonction de maître (MF) vers un dispositif périphérique de commande supplémentaire (LTG₁...LTGₙ),
**qu'**une procédure technique de commutation (VTF) résidant à cet endroit met à disposition une voie de conversation qui est intercommutée en association avec la fonction de maître, et la signalisation devant être délivrée par le système de communication en direction de l'abonné est retransmise à la procédure de signalisation (SF) affectée à l'abonné pour la transmission vers l'abonné.

2. Procédé selon la revendication 1,
**caractérisé en ce que**
la fonction de maître (MF) est définie pour l'interface (Sᵢ), **en ce que** l'affectation d'un abonné vers l'autre dispositif périphérique de commande (LTGⱼ, 1≤j≤n), qui est réalisée pour chaque prise de ligne sur une interface (Sᵢ, avec 1≤i≤k), est pilotée par le dispositif périphérique de commande qui termine la liaison PCM avec les protocoles d'interface vitaux de l'interface (Sᵢ).

3. Procédé selon la revendication 1,
**caractérisé en ce que**
l'affectation d'un abonné vers l'autre dispositif périphérique de commande (LTGⱼ, 1≤j≤n), qui est réalisée pour chaque prise de ligne sur une interface (Sᵢ, avec 1≤i≤k), est pilotée par le dispositif de commande central (CP), notamment dans le cas d'une prise de ligne côté B, le cas échéant en association avec le dispositif périphérique de commande mettant à disposition la fonction de maître (MF).

4. Procédé selon l'une quelconque des revendications 1, 2 ou 3,
**caractérisé en ce que**
le dispositif périphérique de commande mettant à disposition la fonction de maître est muni d'un tableau, qui contient une reproduction momentanée de l'état d'occupation ou du degré d'utilisation de chaque dispositif périphérique de commande et **en ce que** l'affectation d'un abonné vers l'autre dispositif périphérique de commande (LTGⱼ, 1≤j≤n), qui est réalisée pour chaque prise de ligne sur une interface (Sᵢ, avec 1≤i≤k), est réalisée sous considération du degré d'utilisation des dispositifs périphériques de commande (LTG₁...LTGₙ).

5. Procédé selon l'une quelconque des revendications précédentes,
**caractérisé en ce que**
dans le cas d'un degré d'utilisation admissible, la procédure technique de commutation (VTF) et donc la voie de conversation est mise à disposition pour une prise de ligne de préférence par le dispositif périphérique de commande qui ramène les informations de signalisation de l'abonné concerné.

6. Procédé selon l'une quelconque des revendications précédentes,
**caractérisé en ce que**
dans le dispositif périphérique de commande qui termine les voies redondantes de l'interface (Sᵢ) prévues pour les voies avec les protocoles d'interface vitaux, mais qui pour l'instant ne gère pas les protocoles d'interface vitaux, une reproduction suffisamment précise du tableau de la fonction de maître, donc notamment une reproduction de l'état d'occupation de l'ensemble de l'interface (Sᵢ) est tenu à jour, pour qu'en cas de panne des dispositifs périphériques de commande mettant à disposition la fonction de maître, une commutation de substitution de la fonction de maître sur le dispositif périphérique de commande susmentionné soit possible et pour que les connexions existantes qui ne passent pas par l'intermédiaire du dispositif périphérique de commande qui est tombé en panne restent maintenues, ce dont il résulte une fonction de stand-by pour l'interface (Sᵢ).

7. Procédé selon l'une quelconque des revendications précédentes,
**caractérisé en ce que**
les dispositifs périphériques de commande sont conçus de façon redondante, notamment doublée, dans le cas de la terminaison des voies par les protocoles d'interface vitaux d'une interface (Sᵢ) et des voies redondantes prévues pour cette dernière, dans ce même dispositif périphérique de commande, la fonction de stand-by peut être supprimée pour cette interface (Sᵢ).
